# EUROPEAN PATENT APPLICATION

(11) **EP 2 615 561 A1**
(43) Date of publication of application: **17.07.2013**
(21) Application number: 12151036.6
(22) Date of filing: 13.01.2012
(51) Int. Cl.: G06F 17/17, G06F 17/18, H04L 29/08, H04W 4/00

(54) **Spatio-temporal regression using decision criteria and rules to select data for regression**

(71) Applicant: ATS Group (IP Holdings) Limited, Road Town, Tortola (VG)
(72) Inventor: Debes, Christian, 64295 Darmstadt (DE); Huber, Marco, 64295 Darmstadt (DE)
(74) Representative: Zahn, Matthias

(57) **Abstract**

To provide a distribution map for a phenomenon distribution over space and time, a computer (120) is coupled to a plurality of sensors (101, 102 and 103) and periodically collects data sets (Z1(X1,Y1) ... ZN(XN,YN)) from available sensors in a geographic area (100). To allow processing at real-time within time slots T (Calculate) that are no longer than the data collection periods T (Collect), the computer does the following: The computer partitions a representation (130, Z-matrix) of the collected data sets into disjunctive sub-regions (or cells P1/P2/P3/P4; Q1/Q2/Q3). The sub-regions correspond to sub-areas in the geographic area (100). The computer (120) selects an optimal partition (Q1/Q2/Q3) by evaluating a cost function for each sub-region. The cost function for the sub-regions is a rule-based combination of decision criteria such as (a) the expected time for covariance calculations (in view of the number of data sets in the sub-region), (b) the accuracy of data sets (e.g. in view of normal distribution of data, standard deviation, etc.) and (c) the stationarity of data sets within the sub-region. Having performed regression calculation for each sub-region separately, the computer then combines the calculated values to a map (150, Z*).

## Description

### Technical Field

The description relates to data processing in general, and relates to processing data from sensors in particular.

### Background

Sensors are used to monitor the environment, houses, industrial equipment or the like. Sensors are devices that measure a physical, biological, or chemical parameter (often called "phenomenon") and that return a signal which corresponds to the parameter. In most cases, the signal is an electrical signal. While traditional sensors are stationary and transmit the signals through wires, modern sensors are mobile and communicate via radio transmitters.

Using stationary or mobile communication devices, the sensor can be combined to networks with pluralities of sensors. Such networks are more and more used to obtain data that relates to a certain geographic area.

For example, environmental data (like the concentration of gases such as carbon monoxide (CO), carbon dioxide (CO2), ozone (03), nitrogen monoxide (nitric oxide, NO), nitrogen dioxide (N02), sulfur dioxide (S02), hydrogen sulphide (H2S) can be collected.

There is a so-called spatio-temporal aspect to be considered: sensors and devices provide measurement data from a specific area (space aspect) at predefined time intervals (temporal aspect).

Data is supplied to central computers that process the data to obtain, for example, a distribution map of the phenomenon over space (geographic area) and time (past and future). Processing techniques include, for example, regression or other statistical methods. Such techniques can be used to calculate (a) distribution values for regions inside the area where measurement data from sensors is not available (e.g., by regression over location or space) and (b) predictions for the future (e.g., by regression over time).

The mentioned processing techniques use covariance matrices (or similar matrices) in that data from the sensors are related to each other in pairs. However, such matrices are large, and processing requires time and memory.

To let the computers finish processing within time intervals that are sufficiently small to actually use the processed data, the computers would have to be equipped with huge processing power and therefore would be expensive.

Also, data discontinuities in large data sets might make it difficult to apply processing techniques for the complete data set.

### Summary

To provide a distribution map for a phenomenon distribution over space and time, a computer is coupled to a plurality of sensors and periodically collects data sets from available sensors in a geographic area. Since exact measurement data is not available for every space and every time, regression calculation is used to approximate the distribution by a continuous function and/or to replace missing or incorrect data by calculated values. To allow processing at real-time within time slots T (Calculate) that are no longer than the data collection periods T (Collect), the computer does the following: The computer partitions a representation of the collected data sets into disjunctive sub-regions. The sub-regions correspond to sub-areas in the geographic area. The computer selects an optimal partition by evaluating a cost-function for each sub-region. The cost-function for the sub-regions is a rule-based combination of decision criteria such as, for example, the expected time for covariance calculations (in view of the number of data sets in the sub-region), the accuracy of data sets (e.g. in view of normal distribution of data, standard deviation, etc.) and the stationarity (e.g., non-changing of statistical values with time and space) of data sets within the sub-region. Having performed regression calculation for each sub-region separately, the computer then combines the calculated values to a map.

A computer-implemented method to process numeric values that relate to a phenomenon in a geographic area comprises the following: The computer collects data sets with measurement values from sensors that - at the time of measurement - are located in the geographic area. The computer partitions a representation of the collected data sets into disjunctive sub-regions that correspond to sub-areas in the geographic area. The computer then evaluates a calculation-cost function for the sub-regions. The calculation-cost function for the sub-regions is a rule-based combination of decision criteria. The computer selects sub-regions for that the cost function complies with the rules and performs regression calculation for the selected sub-regions.

The decision criteria for the cost-function can include the expected time for covariance calculations or the accuracy of data sets. A degree of accuracy of the data sets can be determined by a standard deviation in a normal distribution of data. The decision criteria for the cost-function can include a stationarity value for the data sets within the sub-region. The results of the calculation are combined to a map. The cost-function can be calculated for the sub-regions separately, or can be calculated for the sub-regions in combination. The cost-function can be calculated by using pre-defined rules. For partitioning the sub-regions, the data sets to be partitioned can correspond to measurement time points. The map that corresponds to the geographic area with calculated values from the regression can be updated. The computer can partition the collected data set and evaluate the cost-function upon detecting that measurement conditions are changed.

In a different aspect, a computer-program product that - when loaded into a memory of a computer and being executed by at least one processor of the computer - performs the steps of the computer-implemented method.

In a further different aspect, a computer processes numeric values that relate to a phenomenon in a geographic area. In the computer, a data set collector receives measurement values from sensors that at the time of measurement are located in the geographic area. A partition module partitions a representation of the received data sets into disjunctive sub-regions that correspond to sub-areas in the geographic area. A selector module evaluates a calculation-cost function for the sub-regions. The calculation-cost function is a rule-based combination of decision criteria to select sub-regions for that the cost function complies with the rules. A regression module processes numeric values for the selected sub-regions by regression calculation.

In the selector module of the computer, the decision criteria for the cost-function can include an expected time for covariance calculations, an accuracy estimation of data sets, or a stationarity value for the data sets within the sub-region. A degree of accuracy of the data sets can be determined by a standard deviation in a normal distribution of data. The computer can comprise a map module to combine results of the calculation are combined to a map that can be continuously updated. The selector module can evaluate the cost-function for the sub-regions separately, or for sub-regions in combination. The cost-function can be evaluated by using pre-defined rules. In an implementation, the partition module of the computer partitions the representation of data sets into sub-regions that correspond to measurement time points.

### Brief Description of the Drawings

FIG. 1 is an overview block diagram with a geographic area, sensors inside that area, and a computer that provides a map of that area with calculated values;

FIG. 2 is a collection of sub-regions of data representations, showing decision criteria for partitions to be used in processing;

FIG. 3 is a time diagram with process steps in consecutive repetitions of a method;

FIG. 4 is a flow chart diagram of a method;

FIG. 5 is a flow chart diagram of a method with optional implementation features;

FIG. 6 is a collection of block diagrams to illustrate implementations of a partitioning activity of the method;

FIG. 7 is a block diagram of the computer of FIG. 1 with more detail; and

FIG. 8 is a time diagram with a data representation at different points in time.

### Detailed Description of the Drawings

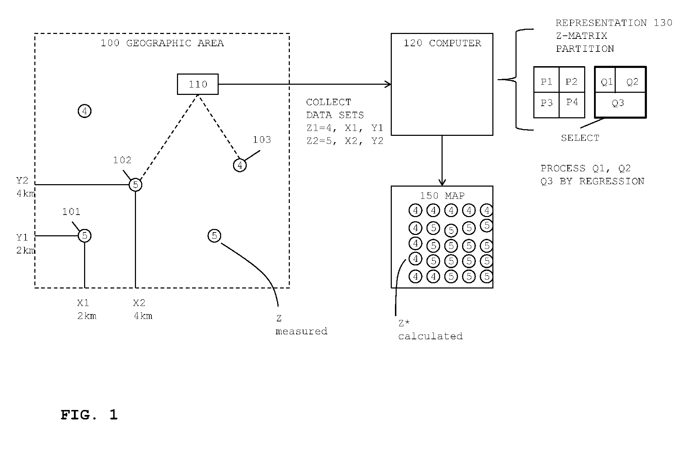

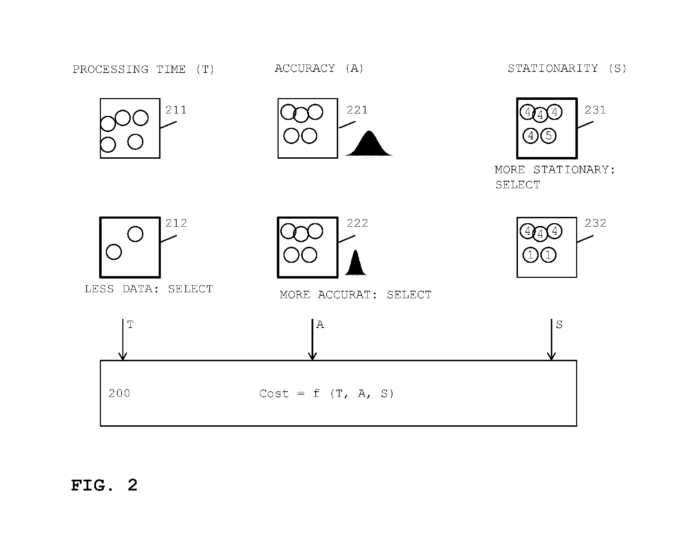

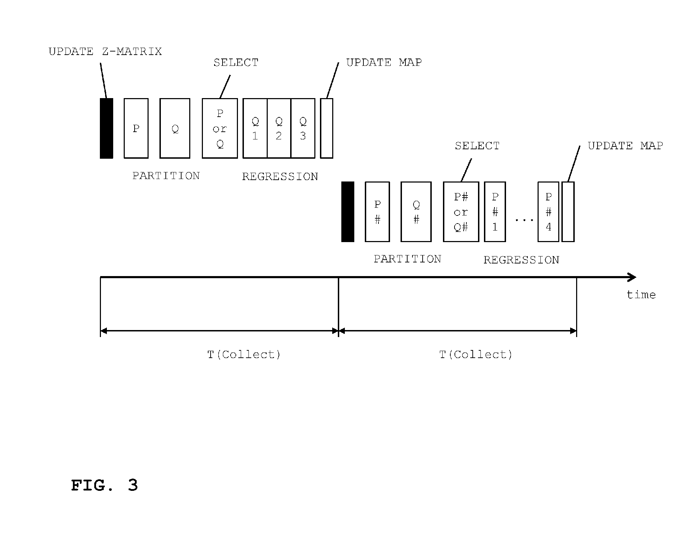

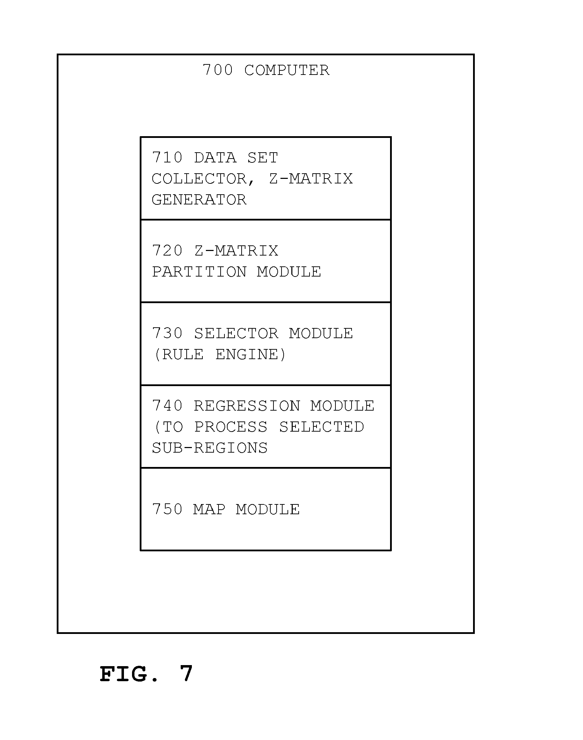

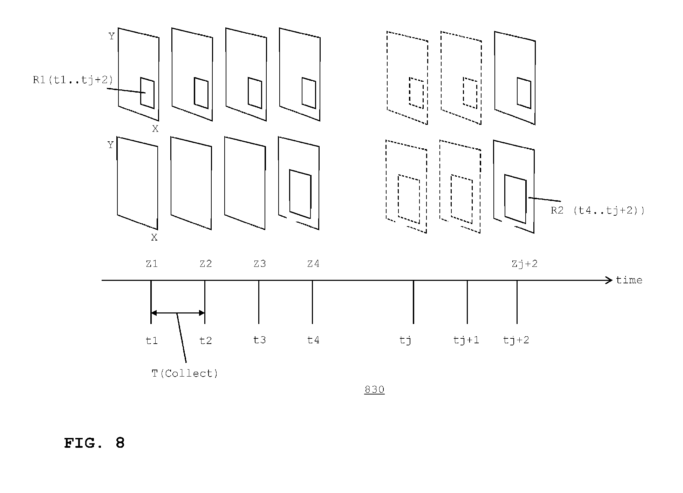

The description starts with an overview of a first scenario (regression over location, FIG. 1), looks at an allocation of sub-regions in view of calculation costs (FIG. 2, (e.g., time T, accuracy A, and stationarity S) and continues with explaining a method (FIGS. 3-6). The description then explains a computer for performing the method (FIG. 7). The description closes by a description of a second scenario with optional regression over time (FIG. 8).

FIG. 1 is an overview block diagram with geographic area 100, sensors 101, 102 and 103 inside that area, as well as computer 120 that provides map 150. The sensors provide data sets (Z, x, y) to computer 120. The figure also shows - symbolized - data representation 130 of area 100 (or "Z-matrix"). Data representation 130 is being processed by computer 120. Data representation 130 has a first partition P (with sub-regions P1, P2, P3 and P4) and a second partition Q (with sub-regions Q1, Q2 and Q3). Map 150 shows calculated values Z* (x, y).

In an illustrative example, a city with about 100.000 inhabitants needs to measure the distribution of a particular gas (like carbon monoxide CO, or sulfur dioxide S02). The distribution should be given for the present time point, shortly after measurement, as map 150. The calculated Z*-values in map 150 are illustrated by numeric values (e.g., Z* = 4, or Z* = 5). Convenient are maps with color-coded values, so that in implementations, the numeric values of the figure would be replaced by colors.

For simplicity of explanation, it can be assumed that the city has a geographic area of approximately 10 km x 10 km (100 square kilometers) and that the location of the sensors 101, 102, 103 can be communicated by Cartesian (XY) coordinates. The XY-coordinates can belong to a grid with equidistant lines every 100 meters. Map 150 is a scaled-down replica of area 100. In other words, map 150 has about 100 x 100 coordinate points for that gas values Z* (x, y) are to be provided. (The figure is simplified to 5 x 5 points).

Looking at the time, the map should be updated in time intervals T (Update). In the example, the map is updated every minute (T (Update) = 1 min).

Theoretically, 10.000 sensors would need to be installed in that area 100. The sensors would be 100 meters away from each other. In practice, the economic costs for installing and maintaining such number of sensors would be prohibitive.

More practical, a smaller number of sensors could be installed at known locations (inside area 100). The map would contain Z (x, y) values from actual measurements and Z* (x, y) values from calculations.

Instead of locally installed sensors, the sensors can be mounted on mobile devices that are carried around by users. Such mobile devices are portable computers, with phone, email and data communication function, so-called smart-phones. Sensors can also be mounted on vehicles that move inside the area. In that respect, sensors 101, 102, and 103 are mobile sensors.

For the above mentioned city, a number of about 1000 mobile devices could be equipped with sensors.

Not all devices are switched on at the same time, and not all of them provide data every time, but for simplicity it can be assumed that all of them provide measurement values Z (x, y).

A data set for a single measurement may contain: location information of the device (e.g., in xy-coordinates with an accuracy of about 10 meters, from GPS), the measurement value Z (e.g. CO in milligram per cubic meter, as a numeric value that corresponds to the read-out of the sensor), a device identification (device ID, user ID or the like, here 1, 2, 3) and, optionally, the measurement time t.

For example, sensor 101 at location x1 = 2 km, y1 = 2 km submits Z1 = 4; sensor 102 at x2 = 4 km, y2 = 4 km submits Z2 = 5; and sensor 103 at x3 = 8 km, y3 = 5 km submits Z3 = 4.

By order of magnitude, the data set can use up to a kilo-byte of data. The plurality of devices submits measurement data every time interval T (Collect) to central computer 120, via existing network communication (e.g., cell phone network according GSM or UMTS-standard, or the like). The time interval T (Collect) usually corresponds to T (Update).

In the example, the central computer receives a number of 1000 data sets (i.e. Z1 to Z1000) every T (Collect) = 1 min.

Looking at data representation 130 of the area 100, representation 130 is symbolic for the data structure in computer 120 that temporarily stores the data sets (from 1000 sensors, every minute). For simplicity of explanation, the representation 130 can be illustrated by a matrix, with rows and columns that correspond to the grid in the geographic area. Matrix elements for that data sets are available (e.g., from sensor 101 at x1, y1) would be shown, empty matrix elements would not be shown. An example will be given in connection with FIG. 2

Representation 130 is updated by the same time interval as the data sets are received (T (Collect).

From a processing perspective to calculate values Z* for the map by regression, the mentioned covariance matrices in the example would have 1000 x 1000 entries because data from every sensor is to be related with data from every other sensor.

To accommodate a regression during that time, covariance matrices are not taken from the complete data representation 130 but from sub-regions. Using sub-regions instead of the complete data sets may also avoid the above-mentioned data discontinuities so that applying processing techniques like regression are more reliable.

This is symbolized on the right side of FIG. 1 by PARTITION, SELECT, and PROCESS.

More in detail, computer 120 divides (or partitions) representation 130 into sub-regions. In the example of FIG. 1 there is a first partition (P) with sub-regions P1, P2, P3 and P4; and a second partition (Q) with sub-regions Q1, Q2 and Q3. Any other appropriate partitioning may be used.

In the example, the second partition Q (with Q1, Q2, and Q3) is being selected. (In the example, this is the partition with the smaller number of regions, but the number of regions is not necessarily a decision criterion). The selected sub-regions are taken separately for calculation, so that for every sub-region, a separate covariance matrix is calculated. Regression to calculate the Z* values (for the map) is done for each covariance matrix.

In view of the example, there is not a single large 1000 x 1000 entry covariance matrix to be processed, but for example, three smaller covariance matrices at 400 x 400 (for Q1), 350 x 350 (for Q2), and 250 x 250 (for Q3).

The description will now explain under what conditions a particular partition (or particular sub-regions) is selected.

FIG. 2 is a collection of sub-regions of data representations, showing decision criteria for sub-regions to be used in processing.

Regarding SELECT (cf. FIG. 1), more in detail, in a pre-processing mode, computer 120 now evaluates which partitions to select in view of decision criteria.

The figures show sub-regions 211, 221 and 231 and sub-regions 212, 222, 232. Data sets are symbolized by circles. Sub-regions 212, 222 and 231 are shown in bold frames because according to criteria they are candidates for being selected.

From left to right, example criteria are given: processing time (T), accuracy (A) and stationarity (S). The criteria go into a cost-function 200 that is f (T, A, S). Depending on the implementation, the cost-function provides a selection of the sub-region or provides a selection of set of sub-regions (e.g., Q1, Q2 and Q3).

For example, the criterion processing time (T) is illustrated on the left side. Sub-regions with less data are faster to process than sub-regions with more data. There may be a selection preference for the sub-regions with the lesser number of data sets. In the example, sub-region 212 would be selected over sub-region 211. However, in case the number of data sets in a sub-region goes below a minimum, the accuracy of the subsequent calculations may become not acceptable.

For example, the criterion accuracy (A) is illustrated in the center. The accuracy is not only a function of the number of data sets, but also on statistical values such as standard deviation (between the data sets, assuming a Gaussian distribution). In the example, both sub-regions 221 and 222 have the same number of data sets, but different standard deviations. Sub-region 222 has a lower standard deviation and will yield a more accurate regression result. Thus, it may be selected (over sub-region 221). The figure symbolizes accuracy by Gauss-curves. In the example, the curve for sub-region 222 (more accurate) is more narrow than the curve for sub-region 221. It is noted that accuracy can also be defined in terms of estimation accuracy of the regression result. In this case, the sub-region will be selected that, for example, minimizes the mean square error between the data set and the regression result.

For example, the further criterion stationarity (S) is illustrated on the right side. As shown for sub-region 231 at the top, the data sets are more unique (sub-region selected) then in sub-region 232 below with more sharp changes.

A process (or a collection of data sets) can be regarded as being stationary if its statistical values (e.g., average, variance, distribution function, or correlation) do not change with time and space. In the example of FIG. 2, in sub-region 231, the average value in the upper part of sub-region 231 is substantially the same as the average value on the lower part of sub-region 231. In other words, inside sub-region 231, the average does not change with space. However, in sub-region 232, the average does change, from an average value 4 (in the upper part) to an average value 1 in the lower part. In the example of FIG. 2, the stationarity is a "local stationarity" that focuses on the location (in the geographic area).

Instead of taking single decision criterion (T, A, S) alone, the decision criteria (T, A, S) are taken in combination and the suitable sub-regions (212, 222, 232) for that the cost-function f(T, A, S) comply with the decision criteria are selected according to cost-function rules.

For example, a rule can be predefined in that, processing time T can be limited to a maximum duration. According to that rule, sub-regions with an expected longer processing time are not selected even if the other criteria A and S are in compliance. Another rule can state that a certain minimum accuracy A should be achieved. According to that rule, sub-regions with an expected lower accuracy may not be selected even if the other criteria T and S are in compliance.

The decision criteria T, A and S are not the only criteria. Further criteria could be used as well. For example, the amount of memory that the computer needs for calculation or communication bandwidth could be used as well.

FIG. 3 is a time diagram with process steps in consecutive repetitions of a method. The figure shows the progress of time from left to right, and shows blocks that correspond to the execution of method steps during two consecutive data collection periods T (Collect).

The Z-matrix is updated. For example, computer 120 receives the data sets from available sensors.

In the following, the Z-matrix is being partitioned. For example, the Z-matrix is partitioned into two alternative partitions P and Q.

According to the cost function (cf. 200 in FIG. 2), a partition is selected. In the example, partition Q is selected because it complies with the rules in that function.

Regression is performed for the sub-regions in the selected partition (here Q1, Q2 and Q3). The figure shows the regressions being performed consecutively, but depending on computing resources, the regressions could be performed otherwise, for example in parallel. Optionally, map 150 is updated.

The mentioned steps are performed within T (Collect). In a repetition, the steps are performed again, but with modified partitions; and - due to the modification - with a different partition (P#) being selected.

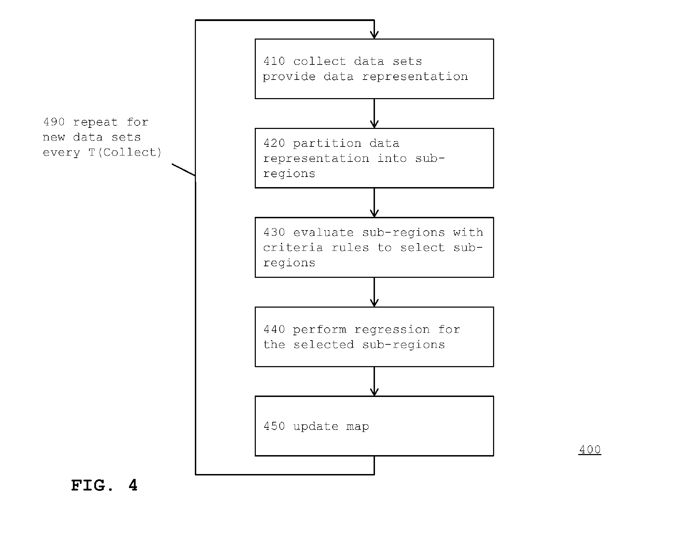

FIG. 4 is a flow chart diagram of a method. Method 400 is a computer-implemented method to process numeric values that relate to a phenomenon in a geographic area (cf. area 100 in FIG. 1). Method 400 comprises collecting 410, partitioning 420, evaluating 430 to select, performing 440 regression, and - optionally - updating 450 map. Method 400 is repeated 490 for new data sets arriving every T (Collect).

In a collecting step 410, data sets (Z1 (X1, Y1) ... ZN (XN, YN)) with measurement values are received from sensors (e.g., 101, 102, 103) that at the time of measurement T (Collect) are located in the geographic area.

In a partitioning step 420, a representation (cf. Z-matrix) of the collected data sets is partitioned into disjunctive sub-regions that correspond to sub-areas in the geographic area.

In an evaluating step 430, a calculation-cost function (cf. 200, f (T, A, S)) for the sub-regions is evaluated. The calculation-cost function for the sub-regions is a rule-based combination of decision criteria (T, A, S) to select sub-regions for that the cost function complies with the rules.

In performing regression step 440, the calculation for the selected sub-regions (Q1/Q2/Q3) is performed.

Applicable regression analysis techniques are, for example, linear regression, method of least squares, Bayesian linear regression, space-time tracking (well known in the field of in signal processing), Kriging (Geostatistics), Gaussian Process Regression (Machine Learning), and other.

The decision criterion for the cost-function can include the expected time for covariance calculations in view of the number of data sets in the sub-region. The decision criterion for the cost-function can include the accuracy of data sets. A degree of accuracy of the data sets can be determined by a standard deviation in a normal distribution of data or by assessing the mean square error between the data set and the regression result. The decision criterion for the cost-function can include a stationarity value for the data sets within the sub-region.

The results of the calculation can be combined to a map. An example map is illustrated in FIG. 1. The map can be provided after every regression. In optional step updating 450 a map, a map is provided with calculated values from the regression. The map corresponds to the geographic area from that measurement data is being taken. When combining the regression results to the map, some results can overlap, especially at borders between sub-regions.

Looking at the cost-function, it can be calculated for the sub-regions separately, for example to have a cost function for P1, for P2, for P3 etc. Alternatively (as explained above), the cost-function can be calculated for sub-regions in combination, for example for partition P and for partition Q. The cost-function can be calculated by using pre-defined rules.

In the partitioning step 420, the sub-regions can correspond to measurement time points, this aspect will be explained with more detail with FIG. 8.

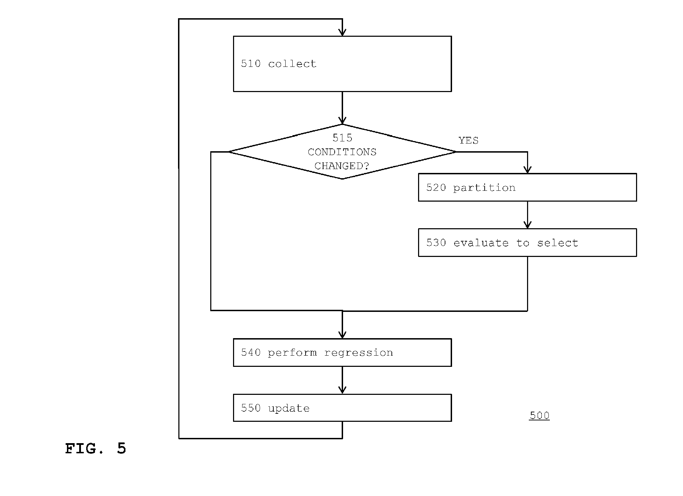

FIG. 5 is a flow chart diagram of a method with optional implementation features. Similar as method 400 (cf. FIG. 4), method 500 comprises collecting 510, partitioning 520, evaluating 530 to select, performing 540 regression; and - optionally - updating (450) map.

Partitioning 520 and evaluating 530 are performed upon detecting that measurement conditions are changed 515. For conditions that are not changed, the implementation avoids the partition/evaluation activities to be performed every T (Collect). Conditions are, for example, the availability of mobile devices and sensors to provide data sets, weather and atmospheric conditions, increase and decrease of traffic and other phenomena that yield a local or global change in the statistics of the acquired data.

The detection of changed conditions can be linked to the decision criteria. For example, in case the local stationarity does not change between consecutive method executions, the mentioned activities can be skipped. This reduces computer resource spending (processing time, memory etc.)

The approach allows quickly reacting on changed conditions. As mentioned, the sensors may be mounted on mobile devices. The devices may be moving inside the geographic area (or leaving that area). Since the location data of each sensor is part of the data set, the calculation can take the location data into account.

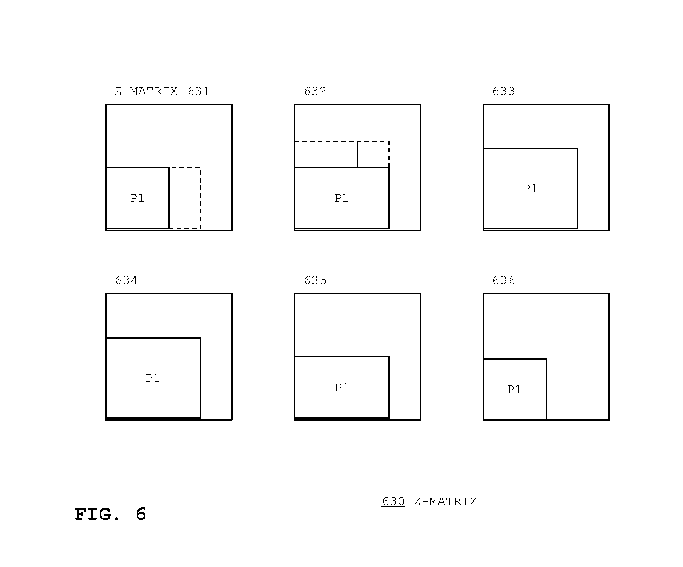

FIG. 6 is a collection of block diagrams to illustrate implementations of a partitioning activity of the method. There is not need to have partitions with sub-regions that are equally large. The sub-regions can have different sizes.

The figures shows Z-matrix 630 (cf. matrix 130) in different versions. In the example, sub-region P1 can be enlarged (from version 631 to 632 and 633) by merging with neighboring sub-regions (shown by dashed lines). Or, sub-region P1 can be made smaller (versions 634, 635, and 636). The principle is applicable to other sub-regions as well.

FIG. 7 is a block diagram of computer 700 (computer 120 of FIG. 1) with more detail. The computer has modules to implement the steps of method 400/500. Computer 700 processes numeric values that relate to a phenomenon in a geographic area (e.g., area 100).

Data set collector 710 receives measurement values from sensors that at the time of measurement are located in the geographic area. Collector 710 generates a representation of the values, for example to the above-explained Z-matrix.

Partition module 720 partitions the representation of the received data sets (i.e., Z-matrix) into disjunctive sub-regions that correspond to sub-areas in the geographic area.

Selector module 730 evaluates a calculation-cost function for the sub-regions. The calculation-cost function is a rule-based combination of decision criteria to select sub-regions for that the cost function complies with the rules. (Details had been explained in connection with FIG. 2). More in detail, in selector module 730, the decision criteria for the cost-function can include an expected time (T) for covariance calculations, an accuracy (A) estimation of data sets, or a stationarity value (S) for the data sets within the sub-region. A degree of accuracy of the data sets can be determined by a standard deviation in a normal distribution of data.

Selector module 730 can evaluate the cost-function 200 (cf. FIG. 2) for the sub-regions separately, or for sub-regions in combination. The cost-function (200) can be evaluated by using pre-defined rules.

Regression module 740 processes the numeric values for the selected sub-regions by regression calculation.

Optionally, map module 750 combines results of the calculation to a map that can be continuously updated (cf. FIG. 3). In an implementation, the partition module of the computer (720) partitions the representation of data sets into sub-regions (R1, R2) that correspond to measurement time points.

The description now continues with explaining a second scenario that uses regression over time to fill in gaps of missing data or to look into the future.

FIG. 8 is a time diagram with data representation 830 at different points in time, and with alternative sub-regions. Data representation 830 (i.e., Z-matrix) is illustrated at different measurement time points t1, t2, t3, t4, ... and tj+2 (i.e. Z1, Z2, Z3, Z4 and Zj+2). In the example, the time points follow time intervals T (Collect) (e.g., 1 min). Other time intervals could be used, for example, T (Collect) * N.

However, for time points tj and tj+1, measurement data is not available, for example, due to a temporary failure of the data collection, or to temporary non-availability of mobile devices to submit data. At time point tj+2 (or later), there is a task to calculate Z*-values for tj and tj+1.

FIG. 8 illustrates two sub-regions R1 and R2 for that evaluation can be performed. Sub-region R1 comprises data values for a small square for time points t1, t2, t3, t4 and tj+2. Sub-region R2 comprises data values for a larger square for a short period for time points t4 and tj+2. The sub-regions correspond not only to sub-areas in the geographic area (e.g., area 100), but also to measurement time points.

Decision criteria as the above-mentioned processing time (T), accuracy (A) and stationarity (S) can be applied likewise. For example, for the criterion processing time (T), there is data for 5 measurement time points to be considered for R1, and data for 2 measurement time points to be considered for R2. Potentially there are more data sets available per measurement time point for R2, because sub-region R2 corresponds to a larger geographic area.

For example, for the criterion accuracy (A), standard deviations could be calculated for each point in time, and the Gaussian curve might become narrower or broader over time. For example, for criterion stationarity (S), the progress of time could be taken into account as well. In the example of FIG. 6, the stationarity is a "temporal stationarity" that focuses on the time.

Predefined rules are applied to the criteria, and either sub-region R1 or sub-region R2 is selected for regression.

The same principle can be applied for calculating Z*-values that anticipate the future. In that case, available data sets from the past are used to anticipate Z* for the future.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site (e.g., in the vehicle) or distributed across multiple sites (e.g. central computer) and interconnected by a communication network. The methods can all be executed by corresponding computer products on the respective devices.

Method steps of the invention can be performed by one or more programmable processors executing a computer program to perform functions of the invention by operating on input data and generating output. Method steps can also be performed by, and an apparatus of the invention can be implemented as, special purpose logic circuitry, e.g., an FPGA (field programmable gate array), a DSP (digital signal processor) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also be provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Mobile devices can be, for example, smart phones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks. The computing system can include clients and servers. A client and server are generally remote from each other and typically interact through a communication network. The relationship of client and server arises by virtue of computer programs running on the respective computers and having a client-server relationship to each other, or a peer-to-peer relationship.

## Claims

1. Computer-implemented method (400) to process numeric values that relate to a phenomenon in a geographic area (100); the method (400) comprising:
collecting (410) data sets (Z1 (X1, Y1) ... ZN (XN, YN)) with measurement values from sensors (101, 102, 103) that at the time of measurement (T (Collect)) are located in the geographic area (100);
partitioning (420) a representation (130, Z-matrix) of the collected data sets into disjunctive sub-regions (P1/P2/P3/P4; Q1/Q2/Q3) that correspond to sub-areas in the geographic area (100);
evaluating (430) a calculation-cost function (200, f (T, A, S)) for the sub-regions (P1/P2/P3/P4; Q1/Q2/Q3), the calculation-cost function (200) for the sub-regions being a rule-based combination of decision criteria (T, A, S) to select sub-regions (Q1/Q2/Q3) for that the cost function complies with the rules; and
performing (440) regression calculation for the selected sub-regions (Q1/Q2/Q3).

2. Method (400) according to claim 1, wherein the decision criteria for the cost-function (200) include the expected time (T) for covariance calculations.

3. Method (400) according to any of claim 1 and 2, wherein the decision criteria for the cost-function (200) include the accuracy (A) of data sets.

4. Method (400) according to claim 3, wherein a degree of accuracy of the data sets is determined by a standard deviation in a normal distribution of data.

5. Method (400) according to any of claims 1 to 4, wherein the decision criteria for the cost-function (200) include a stationarity value for the data sets within the sub-region.

6. Method (400) according to any of claims 1 to 5, wherein the results of the calculation are combined to a map (150, Z*).

7. Method (400) according to any of claims 1 to 6, wherein the cost-function (200) is calculated for sub-regions separately.

8. Method (400) according to any of claims 1 to 7, wherein the cost-function (200) is calculated for sub-regions in combination.

9. Method (400) according to any of claims 1 to 8, wherein the cost-function (200) is calculated by using pre-defined rules.

10. Method (400) according to any of claims 1 to 9, wherein in partitioning (420), the sub-regions (R1, R2) correspond to measurement time points.

11. Method (400) according to any of claims 1 to 10, further comprising updating (450) a map (150) that corresponds to the geographic area with calculated values from the regression.

12. Method (500) according to any of claims 1 to 11, wherein partitioning (520) and evaluating (530) are performed upon detecting that measurement conditions are changed (515).

13. Computer-program product that - when loaded into a memory of a computer and being executed by at least one processor of the computer - performs the steps of the computer-implemented method according to any of claims 1 to 12.

14. Computer (700, 120) to process numeric values that relate to a phenomenon in a geographic area, the computer (700) comprising: a data set collector (710) to receive measurement values from sensors that at the time of measurement are located in the geographic area; a partition module (720) to partition a representation of the received data sets into disjunctive sub-regions that correspond to sub-areas in the geographic area; a selector module (730) to evaluate a calculation-cost function for the sub-regions, the calculation-cost function being a rule-based combination of decision criteria to select sub-regions for that the cost function complies with the rules; and a regression module (740) to process numeric values for the selected sub-regions by regression calculation.

15. Computer (700, 120) according to claim 14, wherein the partition module (720) partitions the representation of data sets into sub-regions (R1, R2) that correspond to measurement time points.
